Europäisches Patentamt

European Patent Office

Office européen des brevets

(19)

(11) Veröffentlichungsnummer: **0 343 242**
**A1**

(12) **EUROPÄISCHE PATENTANMELDUNG**
Veröffentlicht nach Art. 158 Abs. 3 EPÜ

(21) Anmeldenummer: 87903474.2

(22) Anmeldetag: 11.03.87

(51) Int. Cl.³: **B 23 P 6/02**

Daten der zugrundeliegenden internationalen Anmeldung:

(86) Internationale Anmeldenummer:
PCT/SU87/00029

(87) Internationale Veröffentlichungsnummer:
WO88/06940 (22.09.88 88/21)

(43) Veröffentlichungstag der Anmeldung:
29.11.89 Patentblatt 89/48

(84) Benannte Vertragsstaaten:
AT BE CH DE FR GB IT LI NL SE

(71) Anmelder: NAUCHNO-ISSLEDOVATELSKY INSTITUT
TEKHNOLOGII AVTOMOBILNOI PROMYSHLENNOSTI
(NIITavtoprom)
pr. imeni Ju. V. Andropova 22/30
Moscow, 115533(SU)

(72) Erfinder: NECHAEV, Valentin Petrovich
Derbenevskaya nab., 1/2-83
Moscow, 113114(SU)

(72) Erfinder: AKHMATOV, Valery Ivanovich
Moskovskoe shosse, 35-71
Moskovskaya obl. Dolgoprudny, 141700(SU)

(72) Erfinder: TAUBKIN, Boris Lvovich
Kashirskoe shosse, 80-1-326
Moscow, 113209(SU)

(74) Vertreter: Finck, Dieter et al,
Patentanwälte v. Füner, Ebbinghaus, Finck Mariahilfplatz
2 & 3
D-8000 München 90(DE)

(54) **VERFAHREN ZUM WIEDERHERSTELLEN ABGENUTZTER SEITENFLÄCHEN VON HÜLSENARTIGEN TEILEN.**

(57) Das Verfahren zur Wiederherstellung der verschlissenen Seitenfläche eines Bauteils von Typ Buchse besteht darin, dass das Bauteil (I) an dessen nicht verschlissenen Oberfläche (3) mit einem verdichteten pulverförmigen feuerfesten Material (8) fixiert wird. Dann wird das Bauteil (I) bis zum plastischen Zustand erwärmt und darauf abgekühlt.

FIG.1

EP 0 343 242 A1

# VERFAHREN ZUR WIEDERHERSTELLUNG DER VERSCHLISSENEN SEITENFLÄCHE EINES BAUTEILS VON TYP BUCHSE

## Technisches Gebiet

Die vorliegende Erfindung bezieht sich auf den Maschinenbau, genauer auf das Verfahren zur Wiederherstellung der verschlissenen Seitenfläche eines Bauteils von Typ Buchse.

## Zugrundeliegender Stand der Technik

Bekannt ist ein Verfahren zur Wiederherstellung der verschlissenen Seitenfläche eines Bauteils von Typ Buchse (SU, A, 753582).

Das bekannte Verfahren besteht darin, dass ein Bauteil von Typ Buchse an dessen nicht verschlissenen Seitenfläche durch deren Abstützung gegen die Auflagefläche einer Matrize fixiert wird. Beim Einsetzen des Bauteils in die Matrize wird ein Wechselspalt über dessen Höhe zwischen den übrigen Bereichen der nicht verschlissenen Seitenfläche des Bauteils und der Seitenfläche der Matrize gewährleistet, wobei die Spaltgrösse in jedem Durchmesserquerschnitt des Bauteils je nach dem Verschleissgrad des Bauteils in demselben Querschnitt ermittelt wird.

Ferner wird das Bauteil bis zum plastischen Zustand erwärmt und anschliessend abgekühlt.

Das bekannte Verfahren zur Wiederherstellung der verschlissenen Seitenfläche eines Bauteils von Typ Buchse ist ziemlich kompliziert, weil jedesmal beim Übergang von einer Typengrösse des Bauteils zur anderen verschiedene Matrizen hergestellt werden müssen, deren Formen und Abmessungen den Formen und Abmessungen des Bauteils entsprechen, was einen zusätzlichen Arbeits- und Energieaufwand bei deren Herstellung erfordert.

Darüber hinaus entstehen bei der Wiederherstellung der Bauteile von Typ Buchse mit variablen Querschnitten an den Übergängen von einem Querschnitt zum anderen erhebliche thermische Spannungen, die zur Rissbildung führen, insbesondere an den aus Gusseisen hergestellten Bauteilen.

Dies ist auf das Vorhandensein des Spaltes variabler Länge zwischen der nicht verschlissenen Seitenfläche des Bauteils und der Seitenfläche der Matrize zurückzuführen.
Der Spalt verursacht eine ungleichmässige Erwärmung des
Bauteils, weil die Luft, die sich im Spalt befindet, eine
schlechte Wärmeleitfähigkeit hat. Das hat zusätzliche thermische Spannungen zur Folge, was auch zum Bruch des Bauteils beiträgt.


                    Offenbarung der Erfindung

          Der vorliegenden Erfindung liegt die Aufgabe zugrunde,
ein Verfahren zur Wiederherstellung der verschlissenen
Seitenfläche eines Bauteils von Typ Buchse zu schaffen,
bei dem die Fixierung des Bauteils auf solche Weise vorgenommen wird, um die Wiederherstellung der verschlissenen
Seitenfläche des Bauteils mit einer gleichmässigen Verteilung der thermischen Spannungen in diesem Bauteil zu gewährleisten.

          Diese Aufgabe wird dadurch gelöst, dass bei einem
Verfahren zur Wiederherstellung der verschlissenen Seitenfläche eines Bauteils von Typ Buchse, bestehend darin,
dass das Bauteil an dessen nicht verschlissenen Oberfläche
fixiert, bis zum plastischen Zustand erwärmt und anschliessend abgekühlt wird, erfindungsgemäss die Fixierung des
Bauteils an dessen nicht verschlissenen Oberfläche mit
einem verdichteten pulverförmigen feuerfesten Material vorgenommen wird.

          Die Fixierung des Bauteils mit dem verdichteten pulverförmigen feuerfesten Material gestattet es, das Bauteil gleichmässig unabhängig von dessen Geometrie zu erwärmen.

          Das zu verwendende verdichtete pulverförmige feuerfeste Material erfüllt die Funktion einer harten Auflage, die
dicht an die  ganze nicht verschlissene Oberfläche des
wiederherzustellenden Bauteils anliegt, trotz der daran vorhandenen Vorsprünge und Vertiefungen.

          Das dichte Anliegen an das wiederherzustellende Bauteil des pulverförmigen feuerfesten Materials, das heisst
des Materials mit verminderter Wärmeleitfähigkeit, ermöglicht die Verformung dieses Bauteils in vorgegebener Richt-

TPAC-370 0343242

ung im Laufe der Wiederherstellung der verschlissenen Oberfläche. Dies geschieht dadurch, dass die Spannungen, die im wiederherzustellenden Bauteil vorhanden sind, sich im dessen Volumen verteilen, ohne die Änderungen der ursprünglichen Form hervorzurufen.

Da das pulverförmige feuerfeste Material eine verminderte Wärmeleitfähigkeit im Vergleich zum zu bearbeitenden-vorwiegend aus Metall hergestellten - Bauteil hat, erfolgen die Erwärmung und die Abkühlung des Bauteils praktisch unter isothermischen Bedingungen. Dabei können die Temperaturfelder über das ganze Volumen des Bauteils unabhängig von dessen Querschnitten praktisch gleich sein, was günstige Bedingungen für die gleichmässige Verformung des wiederherzustellenden Bauteils schafft.

Dabei entstehen an den Stellen des Bauteils mit variablen Querschnitten keine thermischen Spannungen, die zur ungleichmässigen Verformung der wiederherzustellenden verschlissenen Seitenfläche des Bauteils führen. Dadurch wird die Rissbildung ausgeschlossen.

Die Verwendung des pulverförmigen feuerfesten Materials macht den Prozess der Wiederherstellung des Bauteils nicht komplizierter, weil als solches Material leicht zugängliche und weit bekannte Materialien, zum Beispiel Quarzsand, verwendet werden können.

Bei der Wiederherstellung der verschlissenen Innenfläche eines Bauteils von Typ Buchse ist es empfehlenswert, das Bauteil an dessen Aussenfläche zu fixieren und die Abkühlung über ein verdichtetes pulverförmiges feuerfestes Material vorzunehmen.

Bei der Wiederherstellung der verschlissenen Aussenfläche eines Bauteils von Typ Buchse ist es zweckmässig, das Bauteil an dessen Innenfläche zu fixieren und die Abkühlung über ein verdichtetes pulverförmiges feuerfestes Material vorzunehmen.

Bei der Abkühlung des Bauteils über das verdichtete pulverförmige feuerfeste Material bleiben die Dichte und Abmessungen seiner Schicht konstant. Dadurch wird seine erforderliche Härte erzielt.

Auf solche Weise gewährleistet das erfindungsgemässe Verfahren zur Wiederherstellung der verschlissenen Seitenfläche eines Bauteils von Typ Buchse die Erhaltung der Bauteilformen bei gleichmässiger Verteilung von Spannungen im Bauteil.

Das erfindungsgemässe Verfahren zur Wiederherstellung der verschlissenen Seitenfläche eines Bauteils von Typ Buchse ist ziemlich einfach und zugänglich und erfordert keine teuren Ausrüstungen und Mittel zu dessen Durchführung.

Nachstehend wird ein konkretes Ausführungsbeispiel der vorliegenden Erfindung mit Hinweisen auf beigelegte Zeichnungen beschrieben.

## Kurzbeschreibung der Zeichnungen

Fig. I zeigt schematisch einen Behälter mit einem darin mit einem Spalt untergebrachten Bauteil, welcher Spalt mit einem pulverförmigen feuerfesten Material gefüllt ist, für die Durchführung des erfindungsgemässen Verfahrens zur Wiederherstellung der verschlissenen Seitenfläche eines Bauteils von Typ Buchse, für den Fall, wo die verschlissene Seitenfläche innere Seitenfläche der Buchse ist, im Längsschnitt;

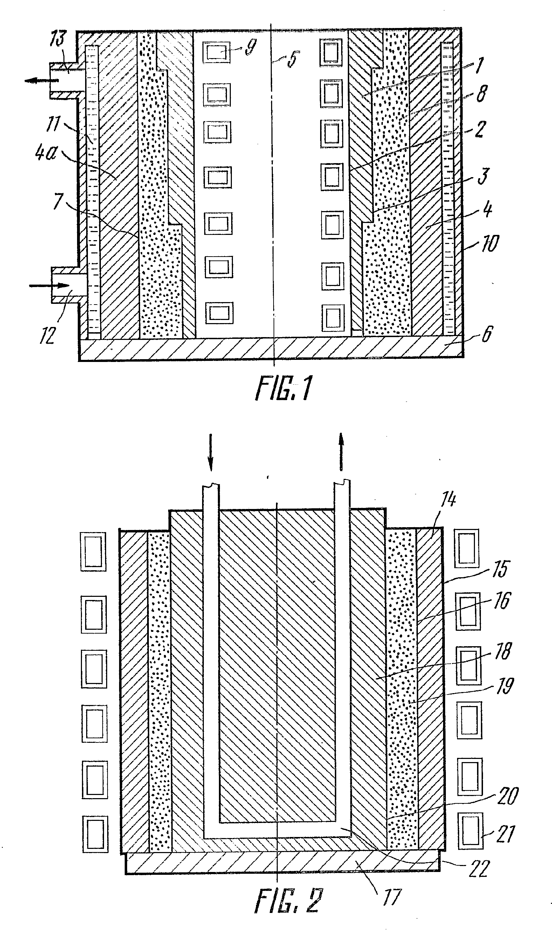

Fig. 2 zeigt schematisch ein Bauteil, das auf einer Platte um einen Dorn herum mit einem Spalt angeordnet ist, welcher Spalt mit einem pulverförmigen feuerfesten Material gefüllt ist, für die Durchführung des erfindungsgemässen Verfahrens zur Wiederherstellung der verschlissenen Seitenfläche eines Bauteils von Typ Buchse, für den Fall, wo die verschlissene Seitenfläche äussere Seitenfläche der Buchse ist, im Längsschnitt.

## Bevorzugte Ausführungsvariante der Erfindung

Das erfindungsgemässe Verfahren zur Wiederherstellung der verschlissenen Seitenfläche eines Bauteils von Typ Buchse wird im weiteren Text der Kürze halber "erfindungsgemässes Verfahren" genannt.

Das erfindungsgemässe Verfahren wird auf folgende Weise durchgeführt.

Gegebenenfalls wird ein Bauteil I (Fig. I), das eine Buchse darstellt, und nämlich dessen verschlissene innere zylindrische Seitenfläche 2 wiederhergestellt. Das Bauteil

I hat auch eine nicht verschlissene äussere zylindrische stufenförmige Seitenfläche 3.

Das Bauteil I wird in einem Behälter 4, der die Form eines von oben offenen Bechers hat, koaxial zu dessen senkrechten geometrischen Längsachse 5 untergebracht.

Das Bauteil I wird frei auf den Boden 6 des Behälters 4 aufgestellt, wobei dessen nicht verschlissene Oberfläche 3 durch die Abstützung derselben gegen eine Auflagefläche 7 fixiert wird, die die innere Seitenfläche des Behälters 4 darstellt. Diese Abstützung wird durch eine Schicht 8 eines pulverförmigen feuerfesten Materials ggf. Quarzsandes realisiert.

In anderen Fällen können als pulverförmiges feuerfestes Material Zirkoniumkonzentrat, pulverförmiges Alluminiumoxyd, Zirkoniumdioxyd u dgl. verwendet werden.

Der Quarzsand wird in einen Spalt, der durch dasselbe Bezugszeichen 8 bezeichnet ist, zwischen der nicht verschlissenen Aussenfläche 3 des wiederherzustellenden Bauteils I und der inneren Seitenfläche 7 des Behälters 4 eingeschüttet. Der erwähnte Sand wird zur Fixierung des wiederherzustellenden Bauteils I an deren nicht verschlissenen Oberfläche 3 auf jede bekannte Weise und mit allen bekannten dazu passenden Mitteln verdichtet.

Dann wird das Bauteil I bis zum plastischen Zustand erwärmt. Bei der Wiederherstellung von Bauteilen grösserer Masse ist eine Verweilzeit für eine gleichmässige Durchwärmung über das ganze Volumen der Bauteile erforderlich.

Die Erwärmung wird mit einem Induktor 9 einer beliebigen bekannten Konstruktion vorgenommen, die für diesen Zweck passt, wobei der Induktor selbst ins Innere des Bauteils I eingesetzt wird.

Bei der Erwärmung dehnt sich das wiederherzustellende Bauteil I aus und verdichtet zusätzlich die Quarzsandschicht 8. Nach dem Übergang des Bauteils I zum plastischen Zustand während der Erwärmung verhindert die Schicht 8 des verdichteten Quarzsandes dessen weitere Ausdehnung und Vergrösserung und zwingt den Werkstoff des Bauteils I, sich in den Innenraum des Bauteils I, der durch dessen verschlissene Oberfläche 2 begrenzt ist, umzuverteilen.

In der Seitenwand 4a des Behälters 4 ist in der Nähe seiner äusseren Seitenfläche IO ein zylindrischer Hohlraum II ausgeführt, der mit einer Wasserquelle (nicht gezeigt) zur Abkühlung der Auflagefläche 7 des Behälters 4 mit dem Bauteil I durch einen Wassereinlaufstutzen I2 und mit einem Ablassbehälter (nicht gezeigt) durch einen Wasserablasstutzen I3 verbunden ist.

Danach wird das Bauteil I dem Behälter 4 auf eine beliebige bekannte Weise und mit beliebigen bekannten dazu passenden Mitteln entnommen und auf die Raumtemperatur abgekühlt. Damit ist der Wiederherstellungszyklus abgeschlossen.

Falls die Wiederherstellung des Bauteils I, d.h. die Veränderung seiner Abmessungen nicht bis zum erforderlichen Wert geschah, wird das Bauteil I erneut in den Behälter 4 eingesetzt und der Wiederherstellungszyklus wiederholt.

Auf solche Weise kann man durch die mehrfache Durchführung des Wiederherstellungszykluses die gewünschten Bauteilabmessungen erhalten.

In einem anderen Fall wird ein Bauteil I4 (Fig. 2) von Typ Buchse, und nämlich dessen verschlissene äussere zylindrische Seitenfläche I5 wiederhergestellt.

Dabei weist das Bauteil I4 eine nicht verschlissene innere zylindrische Seitenfläche I6 auf.

Das Bauteil I4 wird auf einer Platte I7 aufgestellt, im Inneren des Bauteils I4 wird koaxial zu dem Bauteil ein zylindrischer Dorn I8 mit einem Spalt I9 gegenüber der nicht verschlissenen Innenfläche I6 des Bauteils I4 angeordnet.

Der Spalt I9 wird mit dem Quarzsand gefüllt, der auf eine beliebige bekannte Weise und mit beliebigen bekannten Mitteln bis zu einer vorgegebenen Dichte verdichtet wird, d.h. bis zur Bildung einer verdichteten Quarzsandschicht, die mit dem gleichen Bezugszeichen I9 bezeichnet ist.

Das Bauteil I4 wird durch Abstützung seiner nicht verschlissenen Innenfläche I6 gegen die Aussenfläche 20 des Dornes I8 über die verdichtete Quarzsandschicht I9 fixiert.

Mit Hilfe eines Induktors 2I einer beliebigen bekann-

ten Konstruktion, der um die Oberfläche 15 herum positioniert ist, wird das Bauteil 14 bis zum plastischen Zustand erwärmt.

Der verdichtete Quarzsand nimmt dabei den freigewordenen Raum ein, der sich im Spalt 19 infolge der Vergrösserung der Durchmesser des Bauteils 14 durch die Erwärmung gebildet hat.

Im Dorn 18 ist in der Nähe seiner Außenfläche 20 koaxial zu dem Dorn 18 ein Hohlraum 22 ausgeführt, der über Stutzen (nicht gezeigt) mit einer Wasserquelle (nicht gezeigt) und mit einem Ablassbehälter (nicht gezeigt) für Wasser verbunden ist. Durch diesen Hohlraum 22 wird der Dorn 18, die Schicht 19 des pulverförmigen feuerfesten Materials und das Bauteil 14 abgekühlt.

In anderen Fällen kann man das Bauteil anders abkühlen, zum Beispiel durch Umströmung durch die kalte Luft.

Während der Abkühlung stösst das Bauteil 14, indem es die ursprünglichen Abmessungen anzunehmen versucht, auf das Hindernis in Form der verdichteten Quarzsandschicht 19. Dabei werden die vergrösserten Abmessungen des Bauteils 14, die während der Erwärmung erreicht sind, fixiert.

Somit erfolgt bei der Durchführung des erfindungsgemässen Verfahrens zur Wiederherstellung der verschlissenen Seitenfläche eines Bauteils von Typ Buchse eine sichere Umverteilung des Bauteilwerkstoffes von der nicht verschlissenen Oberfläche des Bauteils zu seiner verschlissenen Oberfläche.

Während der Wiederherstellung entstehen minimale Spannungen, insbesondere an den Bauteilstellen mit variablem Querschnitt. Das wird durch den Einsatz des verdichteten pulverförmigen Materials erreicht.

Das pulverförmige feuerfeste Material, indem es eine ziemlich niedrige Wärmeleitfähigkeit hat, trägt zur gleichmässigen Verteilung der Temperatur im gesamten Bauteilvolumen bei, was letzten Endes zur Gestaltung der Bauteilstruktur mit Mindestspannungen im Werkstoffvolumen des Bauteils führt.

In einer Reihe von Fällen kann zwecks der Vergrösserung der Bauteilabmessungen auf das Bauteil ein Überzug aufgetragen werden, der während der Wiederherstellung der

0343242

EFAC-37092.1

Seitenfläche beim Zusammenwirken mit dem verdichteten pulverförmigen feuerfesten Material verfestigt wird. Die Wärme, die am Bauteil während dessen Erwärmung bis zum plastischen Zustand freigesetzt wird, trägt zu einer höheren Haftfestigkeit des Uberzugs- und Bauteilmaterials und in einigen Fällen des auf die Seitenfläche des Bauteils durch Schweissen vorläufig aufgetragenen Überzugs bei.

Das erfindungsgemäss vorgeschlagene Verfahren lässt sich leicht realisieren und erfordert keine teuren Ausrüstungen und Engpassmaterialien.

Nach dem erfindungsgemässen Verfahren wurden die Zylinderbuchsen von Dieselmotoren für Kraftfahrzeuge wiederhergestellt, die am Prüfstand getestet wurden und eine Betriebsdauer ergeben haben, die der Betriebsdauer der neu hergestellten Buchsen in etwa gleich war.

Dank der vorliegenden Erfindung ergibt sich die Möglichkeit, Bauteile mit verbrauchter Betriebsdauer wiederholt zu verwenden, was beträchtlich den Metall- und Produktionsaufwand bei der Herstellung von Bauteilen reduziert.

EPAC-37082.1  **0343242**

## Gewerbliche Anwendbarkeit

Die vorliegende Erfindung kann am erfolgreichsten bei der Wiederherstellung der verschlissenen Oberfläche eines Bauteils von Typ Buchse mit komplizierter Konfiguration verwendet werden.

Das erfindungsgemässe Verfahren zur Wiederherstellung der verschlissenen Seitenfläche eines Bauteils von Typ Buchse kann im Maschinenbau zur Ausbesserung des Ausschusses und in der Reparaturproduktion zur Wiederherstellung solcher Bauteile, wie Buchsen für Pumpenkolbenpaare, für Bremszylinder und Zylinderbuchsen für Verbrennungsmotoren zum Einsatz kommen.

PATENTANSPRUCHE

I. Verfahren zur Wiederherstellung der verschlissenen Seitenfläche eines Bauteils von Typ Buchse, bestehend darin, dass ein Bauteil (I) an dessen nicht verschlissenen Oberfläche (3) fixiert, bis zum plastischen Zustand erwärmt und anschlissend abgekühlt wird, dadurch g e k e n n z e i c h n e t, dass die Fixierung des Bauteils (I) an dessen nicht verschlissenen Oberfläche (3) mit einem verdichteten pulverförmigen feuerfesten Material (8) vorgenommen wird.

2. Verfahren nach Anspruch I, dadurch g e k e n n z e i c h n e t, dass bei der Wiederherstellung der verschlissenen Innenfläche (2) des Bauteils (I) von Typ Buchse das Bauteil (I) an dessen Aussenfläche (3) fixiert wird und die Abkühlung über das verdichtete pulverförmige feuerfeste Material (8) erfolgt.

3. Verfahren nach Anspruch I, dadurch g e k e n n z e i c h n e t, dass bei der Wiederherstellung der verschlissenen Aussenfläche (I5) eines Bauteils (I4) von Typ Buchse das Bauteil (I4) an dessen Innenfläche (I6) fixiert wird und die Abkühlung über ein verdichtetes pulverförmiges Material (I9) erfolgt.

**FIG. 1**

**FIG. 2**

# INTERNATIONAL SEARCH REPORT

International Application No PCT/SU 87/00029

**I. CLASSIFICATION OF SUBJECT MATTER** (if several classification symbols apply, indicate all) [6]

According to International Patent Classification (IPC) or to both National Classification and IPC

IPC[4]  B23P 6/02

**II. FIELDS SEARCHED**

| Minimum Documentation Searched [7] | |
|---|---|
| Classification System | Classification Symbols |
| IPC[4] | B23P 6/00,6/02 |

Documentation Searched other than Minimum Documentation
to the Extent that such Documents are Included in the Fields Searched [8]

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| Y | SU, A1, 753582 (Maloyaroslavetsky filial Gosudarstvennogo Vsesojuznogo ordena Trudovogo Krasnogo Znameni nauchno-issledovatelskogo instituta remonta i expluatatsii mashinno-traktornogo parka et al.) 09 August 1980 (09.08.80) see column 3, lines 1-55, the claims, figure 2 | 1 |
| Y | SU, A1, 659318 (A.S. Kazantsev) 22 June 1979 (22.06.79) see columns 3,4., figure 1 | 1-3 |

---

[*] Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 29 October 1987 (29.10.87) | 30 November 1987 (30.11.87) |

| International Searching Authority | Signature of Authorized Officer |
|---|---|
| ISA/SU | |

Form PCT/ISA/210 (second sheet) (January 1985)